# EUROPÄISCHE PATENTSCHRIFT

(11) **EP 2 384 255 B1**
(45) Veröffentlichungstag und Bekanntmachung des Hinweises auf die Patenterteilung: **04.04.2018**
(21) Anmeldenummer: 09759933.6
(22) Anmeldetag: 19.11.2009
(51) Int. Cl.: B23K 20/12

(54) **VERFAHREN ZUM HERSTELLEN VON ÜBERLAPPUNGSSTOßSCHWEIßVERBINDUNGEN UND ÜBERLAPPUNGSSTOßSCHWEIßVERBINDUNG**
METHOD FOR PRODUCING WELDED LAP JOINTS AND LAP JOINT OBTAINED THEREBY
PROCÉDÉ DÔBTENTION D'UN JOINT DE SOUDURE À RECOUVREMENT ET JOINT OBTENU

(30) Priorität: 26.11.2008 DE 102008044087; 26.11.2008 US 118255 P
(43) Veröffentlichungstag der Anmeldung: 09.11.2011
(60) Teilanmeldung: 16185338.7
(73) Patentinhaber: Airbus Operations GmbH, 21129 Hamburg (DE)
(72) Erfinder: PACCHIONE, Marco, 22605 Hamburg (DE); SILVANUS, Jürgen, 81541 München (DE)
(74) Vertreter: Isarpatent
(86) Internationale Anmeldenummer: PCT/EP2009/065505
(87) Internationale Veröffentlichungsnummer: WO 2010/060860

(56) Entgegenhaltungen:
- DE-A1- 10 336 668
- JP-A- 11 058 039
- JP-A- 2004 042 049
- US-A1- 2005 139 640
- US-A1- 2007 044 406
- US-B1- 6 676 008

## Beschreibung

Die vorliegende Erfindung betrifft ein Verfahren zum Herstellen von Überlappungsstoßschweißverbindungen der aus US-A-2005/0139640 bekannten Art sowie eine derartige Überlappungsstoßschweißverbindung.

Unter Schweißen versteht man (gemäß DIN-Norm DIN EN 14610 und DIN 1910-100) das unlösbare Verbinden von Bauteilen unter Anwendung von Wärme oder Druck - mit oder ohne Schweißzusatzwerkstoffen. Die Verbindung erfolgt je nach Schweißverfahren in einer Schweißnaht oder einem Schweißpunkt, beim Reibverschweißen auch in einer Fläche. Die zum Schweißen notwendige Energie wird von außen zugeführt.

Bei der Herstellung von Überlappungsstoßschweißnähten werden die durch eine Schweißnaht zu verbindenden Bauteile zur Überlappung gebracht, um anschließend miteinander verschweißt zu werden.

Überlappungsstöße lassen sich sowohl durch Kehlnähte randseitig verschweißen als auch mittels verschiedener Verfahren, wie z.B. Punktschweißen oder Rührreibschweißen durch die Lagen von Material hindurch miteinander verschweißen.

Werden Überlappungsstöße durch Punktschweißen, Rührreibschweißen oder andere nicht randseitig Kehlnähte vorsehende Schweißverfahren miteinander verbunden, ergibt sich das Problem, dass Verbindungsspalte zwischen den miteinander verbundenen Bauteilen außerhalb der Schweißstellen gegeben sind. Diese Spalte sind anfällig für eine Korrosion, unter anderem deswegen, weil sich Feuchtigkeit hier einlagern kann. Durch Kapillareffekte gelangt Feuchtigkeit weit in diese Spalte hinein und verbleibt dort. Es ist schwierig, die engen Spalte mit einer Korrosionsschutzbeschichtung vollständig zu füllen. Daher ist bei dieser Form von Überlappungsstoßschweißverbindungen die Haltbarkeit nicht optimal.

Im Stand der Technik gibt es verschiedene Ansätze, die sich zum Ziel gesetzt haben, Lösungen für das genannte Problem zur Verfügung zu stellen. Unter anderem werden zusätzliche Füllmaterialien zwischen, die zu verbindenden Bauteile im Überlappungsbereich eingefügt, um die genannten Nachteile zu beheben. So werden in der Patentanmeldung US 2007/0044406 A1 thermoplastische Dichtmittel zwischen den mittels beispielsweise einer Schweißverbindung zu verbindenden Bauteilen vorgesehen. Diese Füllmaterialien reagieren jedoch teilweise bei den hohen Prozesstemperaturen mit dem Material in der Schweißzone und verändern die Materialeigenschaften während des Schweißprozesses.

Weiter ist aus der JP 11 058039 A ein Verfahren zur Reduzierung von Spannungen bei zwei miteinander zu verbindenden Bauteilen bekannt. Dazu werden Verbindungsvorsprünge an den beiden zu verbindenden Bauteilen in deren Überlappungsbereich vorgesehen. Die beiden Bauteile werden anschließend im Bereich der Verbindungsvorsprünge mittels Reibrührschweißens miteinander verschweißt.

Des Weiteren ist aus der DE 103 36 668 A1 eine Fügestellenstruktur für das Verbinden von einer Welle mit einem Verbindungsflansch eines Nabenteils der Scheibe mittels Reibschweißen bekannt. Zwischen Welle und Verbindungsflansch des Nabenteils ist vor und hinter einer Fügestelle je ein definierter Steg eingebracht, der das beim Reibschweißen erweichte Material in seiner Ausbreitung behindert.

Es ist daher Aufgabe der vorliegenden Erfindung, ein Verfahren zur Herstellung von Überlappungsstoßschweißverbindungen und eine Überlappungsstoßschweißverbindung zur Verfügung zu stellen, welche die die genannten Nachteile beseitigt. Das erfindungsgemäße Verfahren zur Herstellung von Überlappungsstoßschweißverbindungen soll es ermöglichen, Überlappungsstoßschweißverbindungen mit hoher Festigkeit und geringer Korrosionsanfälligkeit herzustellen. Ferner ist es eine Aufgabe der vorliegenden Erfindung Überlappungsstoßschweißverbindungen herstellen zu können, welche außerhalb der eigentlichen Schweißnaht keine Spalte aufweisen, in denen sich Feuchtigkeit oder andere Medien absetzen können.

Erfindungsgemäß wird diese Aufgabe durch das Verfahren zum Herstellen von Überlappungsstoßschweißverbindungen mit den Merkmalen des unabhängigen Patentanspruchs 1 und die Überlappungsstoßschweißverbindung mit den Merkmalen des Patentanspruchs 5 gelöst. In den Unteransprüchen finden sich vorteilhafte Ausgestaltungen und Verbesserungen der Erfindung.

Die der vorliegenden Erfindung zugrunde liegende Idee besteht verfahrensseitig darin, dass bei einem Verfahren zum Herstellen von Überlappungsstoßschweißverbindungen zunächst zwei flächige zu verbindende Bauteile, die jeweils mindestens einen Sockel aufweisen, bereitgestellt werden. Im Hinblick auf die Bauteile ist das Verfahren bevorzugt bei Blechteilen einzusetzen. Die Blechteile bestehen besonders bevorzugt aus Stahl, bevorzugt aus Titan, Aluminium oder anderen schweißbaren Werkstoffen wie z.B. Thermoplastkunststoffen.

In einem nachfolgenden Verfahrensschritt werden die Bauteile so angeordnet, dass die Sockel einander zugewandt sind und sich die Bauteile in einem Überlappungsbereich überlappen, der sich wenigstens teilweise über beide Sockel erstreckt. Die Sockel kann man sich als im wesentlichen ebene plateauförmige Erhebungen vorstellen, die von dem flächigen Basismaterial ausgehen. Werden die beiden Bauteile mit den Sockeln einander zugewandt aufeinander angeordnet, ist der restliche flächige Bereich der Bauteile demzufolge in der Regel voneinander beabstandet. Die Sockel gehen bevorzugt mit einem Radius in das flächige Basismaterial über.

In einem nachfolgenden Verfahrensschritt werden die Bauteile durch Verschweißen im Überlappungsbereich unter Bildung mindestens einer Schweißnaht miteinander verbunden, wobei am Rande des Überlappungsbereichs nicht verschweißte Bereiche entlang der Schweißnaht gebildet werden. Die Verschweißung erfolgt somit in dem Bereich, in welchem die Sockel aneinander angrenzen. Neben der Schweißnaht, aber noch in dem Bereich, in dem sich die Sockel überlappen, erstrecken sich längs der Schweißnaht unverschweißte Bereiche, in deren Bereich die Sockel aneinander anliegen oder einen Spalt bilden.

Anschließend erfolgt ein Abtragen der nicht verschweißten Bereiche von dem überlappenden Bauteilmaterial im Überlappungsbereich, wodurch Außenschnittflächen an den Bauteilen gebildet werden, die in einem stumpfen Winkel zum Überlappungsbereich angeordnet sind. Wie im Vorhergehenden beschrieben ist, verbleiben beim Schweißen im Überlappungsbereich der Sockel neben der Schweißnaht nicht verschweißte Bereiche, in denen die Bauteile aneinander anliegen bzw. einen Spalt bilden. Um diese Bereiche, die korrosionsanfällig sind, da sich auch durch eine Kapillarwirkung Feuchtigkeit hier ansammeln kann, zu entfernen, wird das nicht verschweißte Material neben der Schweißnaht abgetragen. Die Sockel ermöglichen hierbei vorteilhaft einen Materialabtrag ohne beim Abtragen das Basismaterial außerhalb der Sockel zu beschädigen.

Gemäß einer bevorzugten Weiterbildung der vorliegenden Erfindung werden beim Verschweißen der beiden Bauteile mindestens zwei im wesentlichen parallel verlaufende Schweißnähte gebildet. Durch das Vorsehen von mehreren Schweißnähten, die nebeneinander verlaufen, kann eine erhöhte Festigkeit bei der Verbindung beider Bauteile erzielt werden. Bevorzugt sind die einzelnen Schweißnähte ohne Zwischenraum nebeneinander angeordnet. Besonders bevorzugt überlappen sich dabei die einzelnen Schweißnähte. Dadurch wird vermieden, dass Feuchtigkeit zwischen die einzelnen nebeneinander angeordneten Schweißnähte eindringt und dort Korrosion verursachen kann.

Weiter wird beim erfindungsgemäßen Verfahren zum Herstellen von Überlappungsstoßschweißverbindungen als Schweißverfahren ein Rührreibschweißen angewendet, bei dem ein rotierendes Schweißwerkzeug an wenigstens eines der Bauteile zum Erzeugen von Reibungswärme angepresst wird. Im ersten Schritt wird bei diesem Schweißverfahren bevorzugt ein rotierendes Werkzeug mit ausreichend hoher Kraft solange in den Fügespalt der beiden Bauteile gedrückt, bis eine Werkzeugschulter auf der Bauteiloberfläche zur Anlage kommt. Während des zweiten Schritts verweilt das sich drehende Werkzeug für einige Sekunden an der Eintauchstelle. Durch die Reibung zwischen Werkzeugschulter und Fügepartnern erwärmt sich der Werkstoff unter der Schulter bis kurz unter den Schmelzpunkt. Dieser Temperaturanstieg hat einen Festigkeitsabfall zur Folge, wodurch der Werkstoff plastifiziert wird und eine Vermischung der Fügezone möglich wird. Mit dem Einsetzen der Vorschubbewegung beginnt der dritte Schritt, bei dem das rotierende Werkzeug mit hoher Anpresskraft entlang der Fügelinie bewegt wird. Der durch die Vorschubbewegung entstehende Druckgradient zwischen Vorder- und Rückseite des Werkzeugs und dessen Rotationsbewegung bewirken den Transport von plastifiziertem Werkstoff um das Werkzeug herum, der sich dort vermischt und die Naht bildet. Am Ende der Naht wird das Werkzeug wieder aus der Fügezone herausgezogen. Die Vorteile des Rührreibschweißverfahrens liegen darin, dass keine Zusatzwerkstoffe erforderlich sind, hohe Nahtfestigkeiten erzielbar sind, kein Schutzgas nötig ist, der Prozessablauf relativ einfach ist, ein breites Spektrum von Mischverbindungen realisierbar ist und es bei relativ niedrigen Prozesstemperaturen durchführbar ist, wodurch sich ein geringer Verzug ergibt und die Gefügeeigenschaften der zu verschweißenden Bauteile wenig beeinflusst werden.

Gemäß einer Ausführungsform wird beim Schweißvorgang ein Hilfswerkzeug so angeordnet, dass eines der Bauteile zwischen dem Hilfswerkzeug und dem Schweißwerkzeug eingeklemmt ist und beide Sockel an dem Hilfswerkzeug anliegen. Beim Rührreibschweißen wird anschließend Material von beiden Sockeln in eine Aussparung am Hilfswerkzeug, die an beide Sockel angrenzt, eingepresst. Das eingepresste Material verschließt die Trennfuge zwischen den beiden Bauteilen außerhalb der eigentlichen Schweißnaht. Dadurch wird eine Abdichtung der aneinander gefügten Bauteile erreicht. Ein Spalt neben der Schweißnaht in den sich eine Korrosion verursachende Feuchtigkeit einlagern kann, wird somit vorteilhaft geschlossen.

Gemäß einer Ausführungsform ist das Hilfswerkzeug wenigstens teilweise mit einer kratzfesten antihaftenden Beschichtung versehen. Besonders bevorzugt wird hierzu eine Teflonbeschichtung oder bevorzugt eine Keramikbeschichtung vorgesehen. Dies hat den Vorteil, dass das erwärmte Schweißgut nicht am Hilfswerkzeug anhaftet oder dieses beschädigt.

Eine erfindungsgemäße Überlappungsstoßschweißverbindung weist wenigstens zwei sich in einem Überlappungsbereich überlappende Bauteile auf, die jeweils wenigstens einen Sockel aufweisen, wobei die Sockel aufeinander zu ausgerichtet sind und sich wenigstens teilweise in den Überlappungsbereich erstrecken und wenigstens eine Schweißnaht im Überlappungsbereich vorgesehen ist, die die beiden Bauteile miteinander verbindet und beidseitig von der Schweißnaht seitliche durch Abtragen von Schweißgefügematerial gebildete Außenschnittflächen gebildet sind, die entlang der Schweißnaht mit stumpfen Winkeln zum Überlappungsbereich der beiden Bauteile angeordnet sind, wobei beide Bauteil durch eine Rührreibschweißnaht miteinander verbunden sind.

Das erfindungsgemäße Verfahren zum Herstellen von Überlappungsstoßschweißverbindungen und die erfindungsgemäße Überlappungsstoßschweißverbindung bieten den Vorteil eines spaltfreien Verbindungsstoßes der Schweißverbindung. Die Haltbarkeit der erfindungsgemäßen Schweißverbindung ist höher als bei Überlappungsstoßschweißnähten nach dem Stand der Technik. Es werden keine zusätzlichen Füllmaterialien zwischen den zu verbindenden Bauteilen benötigt. Die Korrosionsbeständigkeit der erfindungsgemäßen Schweißverbindung ist höher als bei denen des Standes der Technik, insbesondere da keine Spalte im Überlappungsstoß neben der Schweißnaht gebildet werden, die schlecht zu konservieren sind und einen Angriffspunkt für Korrosion bieten.

Die Erfindung wird im Folgenden anhand von Ausführungsbeispielen unter Bezugnahme auf die beiliegenden Figuren der Zeichnung näher erläutert.

Von den Figuren zeigen:
- Fig. 1: eine schematische Schnittdarstellung einer erfindungsgemäßen Überlappungsstoßschweißverbindung gemäß einem ersten Ausführungsbeispiel in einem ersten Fertigungszustand;
- Fig. 2: eine schematische Schnittdarstellung einer erfindungsgemäßen Überlappungsstoßschweißverbindung gemäß dem Ausführungsbeispiel aus Fig. 1 in fertig gestelltem Zustand; und
- Fig. 3: eine schematische Schnittdarstellung einer Überlappungsstoßschweißverbindung gemäß einem Ausführungsbeispiel, wobei Fig. 3 Merkmale der Erfindung zeigt, aber keine Ausführungsform der Erfindung, wie beansprucht.

In den Figuren bezeichnen dieselben Bezugszeichen gleiche oder funktionsgleiche Komponenten, soweit nichts Gegenteiliges angegeben ist.

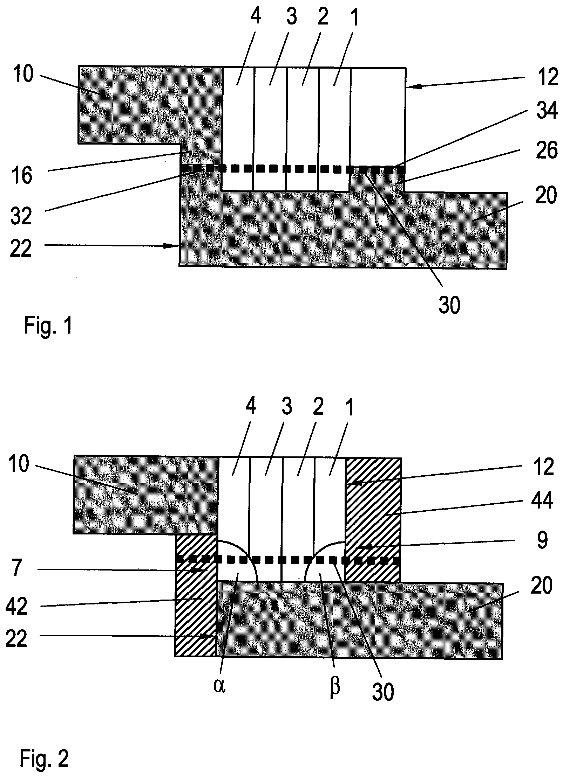

Fig. 1 zeigt eine schematische Schnittdarstellung einer erfindungsgemäßen Überlappungsstoßschweißverbindung gemäß einem ersten Ausführungsbeispiel in einem ersten Fertigungszustand. Die Schnittdarstellung ist so gewählt, dass Rührreibschweißnähte 1, 2, 3, 4 sich in die Papierebene hinein entlang von einem ersten Bauteil 10 und einem damit zu verbindenden zweiten Bauteil 20 erstrecken. Das erste Bauteil 10 weist eine sockelförmige Erhebung 16 auf, die hier unten am Bauteil 10 dargestellt ist. Das zweite Bauteil 20 weist ebenfalls eine sockelförmige Erhebung 26 auf, die hier an seiner Oberseite dargestellt ist. Die Bauteile 10, 20 überlappen sich mit den Sockeln 16, 26 in einem Überlappungsbereich 30, der hier als gepunktete Linie dargestellt ist. Vier Rührreibschweißnähte 1, 2, 3, 4 sind nebeneinander in dieser Darstellung von oben nach unten durch das erste Bauteil 10 in das zweite Bauteil 20 eingebracht. Die Rührreibschweißnähte 1, 2, 3 , 4 grenzen seitlich sich überlappend aneinander und verlaufen in dieser Darstellung im Wesentlichen senkrecht zur Papierebene. Im Überlappungsbereich 30 der beiden Bauteile 10, 20 ist zu beiden Seiten der Schweißnähte 1, 2, 3, 4 je ein schweißnahtfreier Bereich 32, 34 vorgesehen, in denen keine Verschweißung der beiden Bauteile 10, 20 miteinander erfolgt ist.

Fig. 2 zeigt eine schematische Schnittdarstellung einer erfindungsgemäßen Überlappungsstoßschweißverbindung gemäß dem Ausführungsbeispiel aus Fig. 1 in fertig gestelltem Zustand. Die Bauteile 10, 20 sind durch vier sich überlappende Schweißnähte 1, 2, 3, 4 miteinander verschweißt. Die nicht verschweißten Bereiche 32 und 34 aus Fig. 1 sind hierbei nicht mehr gegeben, da diese abgetrennt bzw. abgetragen wurden. Ein erster Schnittbereich 42 und ein zweiter Schnittbereich 44 sind hierzu schematisch als Rechtecke dargestellt. In diesen Schnittbereichen 42, 44 wurde Material von den beiden Bauteilen 10, 20 so abgetrennt, dass im Überlappungsbereich 30 der beiden Bauteile 10, 20 keine nicht verschweißten Bereiche 32, 34 mehr vorhanden sind, sondern die beiden Bauteile 10, 20 lediglich im Bereich der Schweißnähte 1, 2, 3, 4 übereinander liegen. Durch das Abtragen von Material von den beiden Bauteilen 10, 20 wurden eine erste Außenschnittfläche 7 und eine zweite Außenschnittfläche 9 gebildet, die jeweils in einem stumpfen Winkel α bzw. β zum Überlappungsbereich 30 angeordnet sind und die entlang einer Stirnseite 12 am ersten Bauteil 10 bzw. einer Stirnseite 22 am zweiten Bauteil 20 entlang dem jeweils gegenüber angeordneten Sockel 16 bzw. 26 des anderen Bauteils 10 bzw. 20 verlaufen.

Durch das Entfernen der nicht verschweißten Überlappungsbereiche ist die Schweißverbindung frei von Spalten. Feuchtigkeit kann sich somit nicht mehr im Überlappungsbereich der beiden Bauteile absetzen und hier zu Korrosion führen. Dadurch kann die Haltbarkeit der Schweißverbindung wesentlich erhöht werden.

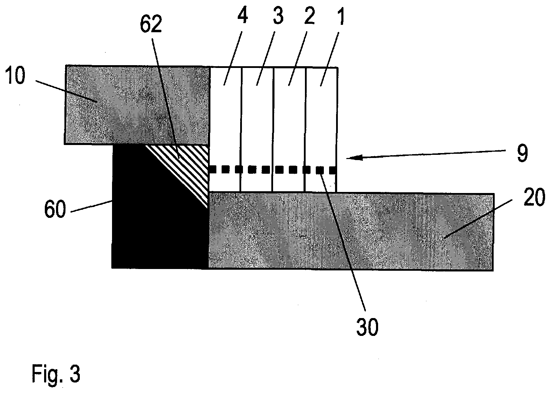

Fig. 3 zeigt eine schematische Schnittdarstellung einer Überlappungsstoßschweißverbindung gemäß einem Ausführungsbeispiel. Zwei sich überlappend angeordnete Bauteile 10, 20, die einen analogen Aufbau, zu den Bauteilen in Fig. 1 und Fig. 2 aufweisen, sind durch vier Rührreibschweißnähte 1, 2, 3, 4 miteinander verschweißt. Im rechten Bildbereich ist entsprechend dem Ausführungsbeispiel aus Fig. 2 durch eine spanende Nachbearbeitung der Überlappungsbereich 30 bis zur Schweißnaht 1 abgetragen worden, um eine spaltfreie Verbindung zu erzeugen. Im linken Bildbereich ist ein Hilfswerkzeug 60 dargestellt, das rechts oben eine Aussparung 62 aufweist. Das Hilfswerkzeug ist so angeordnet, dass das Bauteil 10 zwischen dem Hilfswerkzeug 60 und dem Schweißwerkzeug 50 eingeklemmt ist und beide Bauteile 10, 20 an dem Hilfswerkzeug 60 anliegen. Material von beiden Bauteilen 10, 20 ist in eine Aussparung 62 am Hilfswerkzeug 60, die an beide Bauteile 16, 26 angrenzt, eingepresst.

Dadurch wird auch gemäß diesem Ausführungsbeispiel eine spaltfreie Schweißverbindung 1 erzeugt. Beim Schweißen wird das Bauteilmaterial so in die Aussparung 62 eingepresst, dass es dicht am ersten und zweiten Bauteil 10, 20 angeformt wird und dadurch den Überlappungsbereich 30 zwischen den beiden Bauteilen 10, 20 abschließt.

### Bezugszeichenliste

- 1, 2, 3, 4: Schweißnähte
- 7: erste Außenschnittfläche
- 9: zweite Außenschnittfläche
- 10: erstes Bauteil
- 12: Stirnseite des ersten Bauteils
- 16: Sockel am ersten Bauteil
- 20: zweites Bauteil
- 22: Stirnseite des zweiten Bauteils
- 26: Sockel am zweiten Bauteil
- 30: Überlappungsbereich
- 32: erster nicht verschweißter Bereich
- 34: zweiter nicht verschweißter Bereich
- 42: erster Schnittbereich
- 44: zweiter Schnittbereich
- 50: Schweißwerkzeug
- 60: Hilfswerkzeug
- 62: Aussparung
- α: Winkel zwischen erster Außenschnittfläche und dem Überlappungsbereich
- β: Winkel zwischen zweiter Außenschnittfläche und dem Überlappungsbereich

## Patentansprüche

1. Verfahren zum Herstellen von
Überlappungsstoßschweißverbindungen mit folgenden Verfahrensschritten:
(a) Bereitstellen von zwei zu verbindenden Bauteilen (10, 20), die jeweils mindestens einen Sockel (16, 26) aufweisen;
(b) Anordnen der Bauteile (10, 20) derart, dass die Sockel (16, 26) einander zugewandt sind und sich die Bauteile (10, 20) in einem Überlappungsbereich (30) überlappen, der sich wenigstens teilweise über beide Sockel (16, 26) erstreckt;
(c) Verbinden der Bauteile (10, 20) durch Verschweißen im Überlappungsbereich (30) unter Bildung mindestens einer Schweißnaht (1), wobei am Rande des Überlappungsbereichs (30) nicht verschweißte Bereiche (32, 34) entlang der Schweißnaht (1) gebildet werden, wobei während des Schritts des Verbindens der Bauteile (10, 20) als Schweißverfahren ein Rührreibschweißen angewendet wird, bei dem ein rotierendes Schweißwerkzeug (50) an wenigstens eines der Bauteile (10, 20) zum Erzeugen von Reibungswärme angepresst wird; **gekennzeichnet durch** den Schritt :
(d) Abtragen der nicht verschweißten Bereiche (32, 34) zum Bilden von Außenschnittflächen (7, 9) an den Bauteilen (10, 20), die mit stumpfen Winkeln (α, β) zum Überlappungsbereich (30) angeordnet sind.

2. Verfahren nach Anspruch 1,
**dadurch gekennzeichnet,**
**dass** der Schritt des Abtragens der nicht verschweißten Bereiche (32, 34) im Verfahrensschritt (d) durch ein spanendes Bearbeitungsverfahren, insbesondere durch eine Fräsbearbeitung erfolgt.

3. Verfahren nach Anspruch 1 oder Anspruch 2,
**dadurch gekennzeichnet,**
**dass** während des Schritts des Verbindens der Bauteile (10, 20) mindestens zwei im wesentlichen parallel verlaufende Schweißnähte (1, 2) gebildet werden, die ohne Zwischenraum aneinander angrenzen oder sich überlappen.

4. Verfahren nach einem der vorhergehenden Ansprüche,
**dadurch gekennzeichnet,**
**dass** der Sockel (16) am ersten Bauteil (10) am Rande des ersten Bauteils (10) angeordnet und die erste Außenschnittfläche (7) derart gebildet wird, dass sie sich
von dem Sockel (16) über eine Stirnseite (22) des gegenüberliegenden Bauteils (20) erstreckt und/oder der Sockel (26) am zweiten Bauteil (20) am Rande des zweiten Bauteils (20) angeordnet und die zweite Außenschnittfläche (9) derart gebildet wird, dass sie sich von dem Sockel (26) über eine Stirnseite (12) des gegenüberliegenden Bauteils (10) erstreckt.

5. Überlappungsstoßschweißverbindung mit wenigstens zwei sich in einem Überlappungsbereich (30) überlappenden Bauteilen, die vor dem Verschweißen der Bauteile (10, 20) jeweils wenigstens einen Sockel (16, 26) aufweisen, wobei die Sockel (16, 26) vor dem Verschweißen der Bauteile (10, 20) einander zu ausgerichtet sind und sich wenigstens teilweise in den Überlappungsbereich (30) erstrecken und wenigstens eine Rührreibschweißnaht (1) im Überlappungsbereich (30) vorgesehen ist, die die beiden Bauteile (10, 20) miteinander verbindet , und **dadurch gekennzeichnet, dass** beidseitig von der Schweißnaht (1) seitliche durch Abtragen von Schweißgefügematerial Außenschnittflächen (7, 9) gebildet sind, die entlang der Schweißnaht (1) mit stumpfen Winkeln (α, β) zum Überlappungsbereich (30) der beiden Bauteile (10, 20) **derart** angeordnet sind, **dass die wenigstens eine Schweißnaht (1) frei von Spalten im Überlappungsbereich (30)** ist.

6. Überlappungsstoßschweißverbindung nach einem der
Ansprüche 5 oder 6,
**dadurch gekennzeichnet,**
**dass** mindestens zwei im wesentlichen parallel verlaufende Schweißnähte (1, 2) vorgesehen sind.

7. Überlappungsstoßschweißverbindung nach Anspruch 6,
**dadurch gekennzeichnet,**
**dass** die Schweißnähte (1, 2) aneinander angrenzen.

8. Überlappungsstoßschweißverbindung nach einem der
Ansprüche 5 bis 7,
**dadurch gekennzeichnet,**
**dass** die Außenschnittflächen (7, 9) nur im Bereich der Sockel (16, 26) vorgesehen sind.

9. Überlappungsstoßschweißverbindung nach einem der
Ansprüche 5 bis 8,
**dadurch gekennzeichnet,**
**dass** der Sockel (16) am ersten Bauteil (10) am Rande des ersten Bauteils (10) angeordnet und die erste Außenschnittfläche (7) derart gebildet ist, dass sie sich von dem Sockel (16) über eine Stirnseite (22) des gegenüberliegenden Bauteils (20) erstreckt und/oder der Sockel (26) am zweiten Bauteil (20) am Rande des zweiten Bauteils (20) angeordnet und die zweite Außenschnittfläche (9) derart gebildet ist, dass sie sich von dem Sockel (26) über eine Stirnseite (12) des gegenüberliegenden Bauteils (10) erstreckt.

## Claims

1. Method for producing overlapping weld joints, said method comprising the following steps:
(a) providing two components (10, 20) that are to be connected and that in each case comprise at least one base (16, 26);
(b) arranging the components (10, 20) in such a manner that the bases (16, 26) are facing one another and the components (10, 20) overlap one another in an overlapping region (30) that extends at least in part over the two bases (16, 26);
(c) connecting the components (10, 20) by means of welding in the overlapping region (30) whilst forming at least one weld (1), wherein non-welded regions (32, 34) are formed along the weld (1) on the edge of the overlapping region (30), wherein during the step of connecting the components (10, 20) a friction stir welding procedure is used as the welding method, in which a rotating welding tool (50) is pressed onto at least one of the components (10, 20) so as to generate frictional heat; **characterised by** means of the step:
(d) removing the non-welded regions (32, 34) so as to form outer cut surfaces (7, 9) on the components (10, 20) that are arranged at obtuse angles (α, β) with respect to the overlapping region (30).

2. Method according to claim 1,
**characterised in that**
the step of removing the non-welded regions (32, 34) in the method step (d) is performed by means of a machining method, in particular by means of a milling method.

3. Method according to claim 1 or claim 2,
**characterised in that**
during the step of connecting the components (10, 20) at least two welds (1, 2) are formed that extend essentially parallel to one another and that adjoin one another or overlap without an intermediate space.

4. Method according to any one of the preceding claims,
**characterised in that**
the base (16) is arranged on the first component (10) on the edge of the first component (10) and the first outer cut surface (7) is formed in such a manner that it extends from the base (16) over a front end face (22) of the opposite-lying component (20) and/or the base (26) is arranged on the second component (20) on the edge of the second component (20) and the second outer cut surface (9) is formed in such a manner that it extends from the base (26) over a front end face (12) of the opposite-lying component (10).

5. Overlapping weld joint having at least two components that overlap in an overlapping region (30), said components comprising in each case at least one base (16, 26) prior to welding the components (10, 20), wherein the bases (16, 26) are oriented facing one another prior to welding the components (10, 20) and extend at least in part into the overlapping region (30) and at least one friction stir weld (1) is provided in the overlapping region (30), said friction stir weld connecting the two components (10, 20) to one another, and **characterised in that** lateral outer cut surfaces (7, 9) are formed on the two sides of the weld (1) by means of removing weld structure material and said outer cut surfaces are arranged along the weld (1) at obtuse angles (α, β) with respect to the overlapping region (30) of the two components (10, 20) in such a manner that the at least one weld (1) is free from gaps in the overlapping region (30).

6. Overlapping weld joint according to any one of the claims 5 or 6,
**characterised in that**
at least two welds (1, 2) are provided that extend essentially parallel to one another.

7. Overlapping weld joint according to claim 6, **characterised in that** the welds (1, 2) adjoin one another.

8. Overlapping weld joint according to any one of the claims 5 to 7,
**characterised in that**
the outer cut surfaces (7, 9) are only provided in the region of the bases (16, 26).

9. Overlapping weld joint according to any one of the claims 5 to 8,
**characterised in that**
the base (16) on the first component (10) is arranged on the edge of the first component (10) and the first outer cut surface (7) is formed in such a manner that it extends from the base (16) over a front end face (22) of the opposite-lying component (20) and/or the base (26) on the second component (20) is arranged on the edge of the second component (20) and the second outer cut surface (9) is formed in such a manner that it extends from the base (26) over a front end face (12) of the opposite-lying component (10).

## Revendications

1. Procédé de fabrication de joints de soudure à recouvrement comprenant les étapes de procédé suivantes :
(a) fournir deux composants à relier (10, 20) et qui présentent chacun au moins un socle (16, 26) ;
(b) disposer les composants (10, 20) de telle sorte que les socles (16, 26) sont en regard les uns des autres et que les composants (10, 20) se chevauchent dans une zone de recouvrement (30) qui s'étend au moins en partie sur les deux socles (16, 26) ;
(c) relier les composants (10, 20) par soudage dans la zone de recouvrement (30) en formant au moins un cordon de soudure (1), dans lequel les zones non soudées (32, 34) en bordure de la zone de recouvrement (30) sont formées le long du cordon de soudure (1), dans lequel pendant l'étape consistant à relier les composants (10, 20), un soudage par friction et malaxage est utilisé comme procédé de soudage, dans lequel un outil à souder rotatif (50) est pressé contre au moins un des composants (10, 20) pour générer une chaleur de frottement, **caractérisé par** l'étape consistant à :
(d) enlever les zones non soudées (32, 34) pour former des surfaces découpées extérieures (7, 9) sur les composants (10, 20) et qui sont disposées avec des angles obtus (α, β) par rapport à la zone de recouvrement (30).

2. Procédé selon la revendication 1,
**caractérisé en ce**
**que** l'étape consistant à enlever les zones non soudées (32, 34) dans l'étape de procédé (d) se fait par un procédé de traitement par usinage, en particulier par un traitement par fraisage.

3. Procédé selon la revendication 1 ou la revendication 2,
**caractérisé en ce**
**que**, pendant l'étape consistant à relier les composants (10, 20), au moins deux cordons de soudure (1, 2) s'étendant sensiblement parallèlement sont formés et son adjacents les uns aux autres sans espace intermédiaire ou se chevauchent les uns sur les autres.

4. Procédé selon une des revendications précédentes,
**caractérisé en ce**
**que** le socle (16) sur le premier composant (10) est disposé en bordure du premier composant (10) et la première surface découpée extérieure (7) est formée de telle sorte qu'elle s'étend depuis le socle (16) au-dessus d'une face frontale (22) du composant opposé (20) et/ou le socle (26) sur le second composant (20) est disposé en bordure du second composant (20) et la seconde surface découpée extérieure (9) est formée de telle sorte qu'elle s'étend depuis le socle (26) au-dessus d'une face frontale (12) du composant opposé (10).

5. Joint de soudure à recouvrement comprenant au moins deux composants se chevauchant dans une zone de recouvrement (30) et qui présentent chacun au moins un socle (16, 26) avant le soudage des composants (10, 20), les socles (16, 26) étant orientés l'un par rapport à l'autre avant le soudage des composants (10, 20) et s'étendant au moins en partie dans la zone de recouvrement (30) et au moins un cordon de soudure par friction et malaxage (1) est prévu dans la zone de recouvrement (30) pour relier les deux composants (10, 20) l'un à l'autre,
**caractérisé en ce**
**que** des deux côtés du cordon de soudure (1) des surfaces découpées extérieures (7, 9) sont formées latéralement en enlevant le matériau de structure de soudage et sont disposées le long du cordon de soudure (1) avec des angles obtus (a, β) par rapport à la zone de recouvrement (30) des deux composants (10, 20) de telle sorte que l'au moins un cordon de soudure (10) ne présente pas d'interstices dans la zone de recouvrement (30).

6. Joint de soudure à recouvrement selon une des revendications 5 ou 6,
**caractérisé en ce**
**qu'**au moins deux cordons de soudure (1, 2) s'étendant sensiblement parallèlement sont prévus.

7. Joint de soudure à recouvrement selon la revendication 6,
**caractérisé en ce**
**que** les cordons de soudure (1, 2) sont adjacents les uns aux autres.

8. Joint de soudure à recouvrement selon une des revendications 5 à 7,
**caractérisé en ce**
**que** les surfaces découpées extérieures (7, 9) sont uniquement prévues au niveau du socle (16, 26).

9. Joint de soudure à recouvrement selon une des revendications 5 à 8,
**caractérisé en ce**
**que** le socle (16) sur le premier composant (10) est disposé en bordure du premier composant (10) et la première surface découpée extérieure (7) est formée de telle sorte qu'elle s'étend depuis le socle (16) au-dessus d'une face frontale (22) du composant opposé (20) et/ou le socle (26) sur le second composant (20) est disposé en bordure du second composant (20) et la seconde surface découpée extérieure (9) est formée de telle sorte qu'elle s'étend depuis le socle (26) au-dessus d'une face frontale (12) du composant opposé (10).
